(19) 

Europäisches
Patentamt
European
Patent Office
Office européen
des brevets

(11) EP 3 375 834 A1

(12) **EUROPEAN PATENT APPLICATION**
published in accordance with Art. 153(4) EPC

(43) Date of publication:
**19.09.2018 Bulletin 2018/38**

(21) Application number: **16864379.9**

(22) Date of filing: **11.11.2016**

(51) Int Cl.:
*C09J 7/02* (2006.01)          *C09J 201/00* (2006.01)
*H01M 2/16* (2006.01)          *H01M 10/04* (2006.01)
*H01M 10/058* (2010.01)

(86) International application number:
**PCT/JP2016/083594**

(87) International publication number:
**WO 2017/082418 (18.05.2017 Gazette 2017/20)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **11.11.2015 JP 2015221107**

(71) Applicant: **Nitto Denko Corporation**
**Ibaraki-shi, Osaka 567-8680 (JP)**

(72) Inventors:
• **KAWABE, Shigeki**
  **Ibaraki-shi**
  **Osaka 567-8680 (JP)**
• **SHIMOKAWA, Daisuke**
  **Ibaraki-shi**
  **Osaka 567-8680 (JP)**

(74) Representative: **Müller-Boré & Partner**
**Patentanwälte PartG mbB**
**Friedenheimer Brücke 21**
**80639 München (DE)**

(54) **ADHESIVE TAPE**

(57)    Provided is a pressure-sensitive adhesive tape that can be used in the fixing of an electrode and a separator at the time of the production of a secondary battery, and that can satisfactorily fix the separator and the electrode to each other while maintaining the permeability of an electrolytic solution into the separator. A pressure-sensitive adhesive tape according to one embodiment of the present invention includes: a first base material; and a pressure-sensitive adhesive layer formed in a peelable manner on the first base material, in which the pressure-sensitive adhesive layer is formed by patterning.

FIG.1

EP 3 375 834 A1

## Description

Technical Field

The present invention relates to a pressure-sensitive adhesive tape.

Background Art

In general, a secondary battery includes an electrode member formed of a positive electrode, a negative electrode, and a porous separator arranged between the positive electrode and the negative electrode. In the electrode member, the electrodes (the positive electrode and the negative electrode) and the separator need to be fixed to each other. For example, a method including fusing the end portions of the separator to the electrodes (e.g., Patent Literature 1), and a method including directly coating the separator with an adhesive, and then bonding the separator and the electrodes to each other (e.g., Patent Literature 2) have been known. However, the method including fusing the end portions involves a problem in that a positional shift between the electrodes and the separator is liable to occur at the time of the production of the battery, and a problem in that the shrinkage of the separator is liable to occur at the time of the use of the battery. Those phenomena are responsible for an internal short circuit caused by contact between the positive electrode and the negative electrode. In addition, in the method including directly coating the separator with the adhesive, the adhesive may inhibit the permeability of an electrolytic solution into the separator. In addition, when the member is produced by the coating with the adhesive, a long-time drying step is required and hence the following problems occur. The separator is damaged by heating and the efficiency of the production deteriorates.

Citation List

Patent Literature

[0003]

　　[PTL 1] JP 2000-173642 A
　　[PTL 2] JP 2001-357839 A

Summary of Invention

Technical Problem

The present invention has been made to solve the conventional problems, and an object of the present invention is to provide a pressure-sensitive adhesive tape that can be used in the fixing of an electrode and a separator at the time of the production of a secondary battery, and that can satisfactorily fix the separator and the electrode to each other while maintaining the permeability of an electrolytic solution into the separator.

Solution to Problem

According to one embodiment of the present invention, there is provided a pressure-sensitive adhesive tape, including: a first base material; and a pressure-sensitive adhesive layer formed in a peelable manner on the first base material, in which the pressure-sensitive adhesive layer is formed by patterning.
According to another embodiment of the present invention, there is provided a pressure-sensitive adhesive tape, including: a first base material; and a pressure-sensitive adhesive laminate formed in a peelable manner on the first base material, in which: the pressure-sensitive adhesive laminate includes a second base material and pressure-sensitive adhesive layers formed on both sides of the second base material; and the pressure-sensitive adhesive layers are each formed by patterning.
In one embodiment, the pressure-sensitive adhesive layer contains a heat-weldable pressure-sensitive adhesive.
In one embodiment, the pressure-sensitive adhesive layer contains a pressure-sensitive adhesive having a swelling degree for a nonaqueous electrolytic solution of from 5% to 200%.
In one embodiment, the pressure-sensitive adhesive layer is formed in a dot shape.
In one embodiment, a ratio of an area of the pressure-sensitive adhesive layer to an area of the first base material is from 5% to 90%.
In one embodiment, the pressure-sensitive adhesive layer has a thickness of from 1 $\mu$m to 30 $\mu$m.

In one embodiment, the pressure-sensitive adhesive layer has a tack value at 25°C of 10 N or less.

In one embodiment, a peel strength at 23°C at a time of peeling of the first base material from the pressure-sensitive adhesive layer is 2.00 N/50 mm or less.

In one embodiment, the pressure-sensitive adhesive tape is used by being bonded to a separator at a time of production of a nonaqueous secondary battery.

Advantageous Effects of Invention

The pressure-sensitive adhesive tape of the present invention is configured such that the patterned pressure-sensitive adhesive layer can be transferred onto an adherend. With such configuration, the pressure-sensitive adhesive tape that can, when bonded to a separator, satisfactorily fix the separator and an electrode to each other while maintaining the permeability of an electrolytic solution into the separator can be provided. In addition, when the pressure-sensitive adhesive tape of the present invention is used, the separator and the electrode can be simply and easily fixed to each other, and hence production efficiency in battery production can be improved.

Brief Description of Drawings

FIG. **1(a)** is a schematic plan view of a pressure-sensitive adhesive tape according to one embodiment of the present invention, and FIG. **1(b)** is a schematic sectional view of the pressure-sensitive adhesive tape according to one embodiment of the present invention.

FIG. **2** is a schematic sectional view of a pressure-sensitive adhesive tape according to another embodiment of the present invention.

FIGS. **3** are schematic plan views for illustrating examples of the pattern shape of a pressure-sensitive adhesive layer in one embodiment of the present invention.

Description of Embodiments

A. Entire Configuration of Pressure-sensitive Adhesive Tape

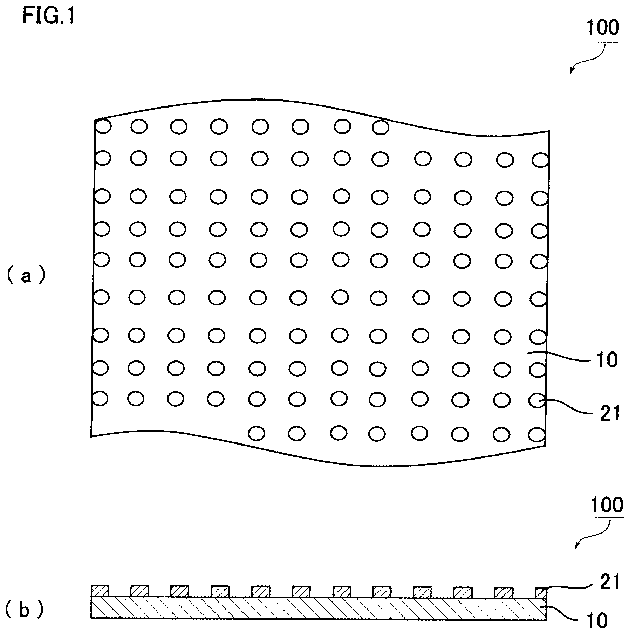

FIG. **1(a)** is a schematic plan view of a pressure-sensitive adhesive tape according to one embodiment of the present invention, and FIG. **1(b)** is a schematic sectional view of the pressure-sensitive adhesive tape according to one embodiment of the present invention. Apressure-sensitive adhesive tape **100** includes a first base material **10** and a pressure-sensitive adhesive layer **21**. The pressure-sensitive adhesive layer **21** is formed in a peelable manner on the first base material **10**. In addition, the pressure-sensitive adhesive layer **21** is formed by patterning on the first base material **10**. The term "peelable" means that the pressure-sensitive adhesive layer **21** can be transferred onto an adherend (e.g. , a polypropylene film). A release liner may be arranged outside the pressure-sensitive adhesive layer of the pressure-sensitive adhesive tape of the present invention for the purpose of protecting a pressure-sensitive adhesive surface until the tape is used, though the liner is not illustrated.

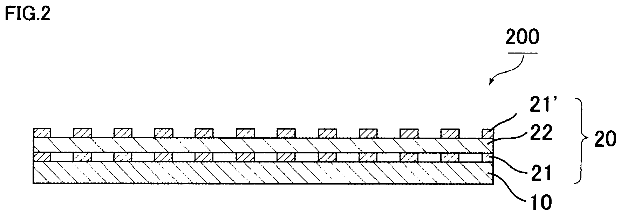

FIG. **2** is a schematic sectional view of a pressure-sensitive adhesive tape according to another embodiment of the present invention. A pressure-sensitive adhesive tape **200** includes the first base material **10** and a pressure-sensitive adhesive laminate **20** formed in a peelable manner on the first base material. The pressure-sensitive adhesive laminate **20** includes a second base material **22**, and pressure-sensitive adhesive layers **21** and **21'** formed on both sides of the second base material **22.** Also in the pressure-sensitive adhesive tape **200**, the pressure-sensitive adhesive layers are each formed by patterning. Inaddition, a release liner maybe arranged outside each of the pressure-sensitive adhesive layers for the purpose of protecting a pressure-sensitive adhesive surface until the tape is used, though the liner is not illustrated.

The pressure-sensitive adhesive tape of the present invention can be used for bonding two adherends to each other. More specifically, after the pressure-sensitive adhesive tape has been bonded to one of the adherends (e.g., a separator), the pressure-sensitive adhesive layer is transferred onto the adherend by peeling the first base material. The other adherend (e.g., an electrode) is laminated on the pressure-sensitive adhesive layer thus transferred. Thus, the two adherends are bonded to each other. In one embodiment, the pressure-sensitive adhesive tape of the present invention is used by being bonded to a separator (e.g., a separator including polypropylene or polyethylene) at the time of the production of a secondary battery (e.g. , a nonaqueous secondary battery). Thus, the separator and an electrode (e.g., a positive electrode or negative electrode for a nonaqueous battery) can be bonded to each other. According to the pressure-sensitive adhesive tape of the present invention, adherends can be bonded to each other without through coating with a pressure-sensitive adhesive, and hence a bonding step can be simplified.

As described above, in the pressure-sensitive adhesive tape of the present invention, the pressure-sensitive adhesive layer is patterned. A separator to be used in a battery is made porous so that an ion can migrate. When the pressure-sensitive adhesive tape of the present invention in which the pressure-sensitive adhesive layer is patterned is used at the time of the bonding of the separator and an electrode to each other, the clogging of the pores of the separator is prevented, and hence the permeability of an electrolytic solution into the separator is maintained. In addition, the position at which the pressure-sensitive adhesive layer is formed is unevenly distributed to a predetermined site (e.g., an end portion), and hence the separator and the electrode can be satisfactorily fixed to each other. Further, the shrinkage of the separator at the time of the use of the battery can be effectively prevented.

In the pressure-sensitive adhesive tape, a peel strength at 23°C at the time of the peeling of the first base material from the pressure-sensitive adhesive layer is preferably 2.00 N/50 mm or less, more preferably from 0.01 N/50 mm to 1.00 N/50 mm. When the peel strength falls within such range, a pressure-sensitive adhesive tape that can be satisfactorily transferred onto a separator or an electrode can be obtained. The "peel strength at 23°C at the time of the peeling of the first base material from the pressure-sensitive adhesive layer" may be measured with an existing tensile tester, such as AUTOGRAPH AG-I manufactured by Shimadzu Corporation, and is measured under the conditions of a tensile rate of 300 mm/min and a peel angle of 180°.

A shear pressure-sensitive adhesive strength at 25°C at the time of the bonding of the electrode sheet and porous film of a nonaqueous battery to each other with the pressure-sensitive adhesive layer (patterned pressure-sensitive adhesive layer) forming the pressure-sensitive adhesive tape of the present invention is preferably 1.85 N/cm$^2$ or more, more preferably 2.00 N/cm$^2$ or more. When the shear pressure-sensitive adhesive strength is less than 1.85 N/cm$^2$, a problem, such as a shift between a separator and an electrode, or the peeling of the members, may occur in a production process for the nonaqueous battery. Although the shear pressure-sensitive adhesive strength is preferably as high as possible, an upper limit value therefor is, for example, 500 N/cm$^2$. In the present invention, the pressure-sensitive adhesive layer is excellent in shear pressure-sensitive adhesive strength because the pressure-sensitive adhesive layer is evenly formed by the patterning. The shear pressure-sensitive adhesive strength may be measured with an existing tensile tester, such as AUTOGRAPH AG-I manufactured by Shimadzu Corporation.

A porous film is used as a separator in a nonaqueous battery, and its porosity is generally from 30% to 80%. When the pressure-sensitive adhesive layer is transferred from the first base material of the pressure-sensitive adhesive tape onto the porous film, a change in porosity of the porous film (porosity (%) before transfer-porosity (%) after transfer) is preferably 50% or less, more preferably from 0% to 30%. In the present invention, the air permeability of the separator (porous film) can be maintained because the patterned pressure-sensitive adhesive layer is formed.

B. Pressure-sensitive Adhesive Layer

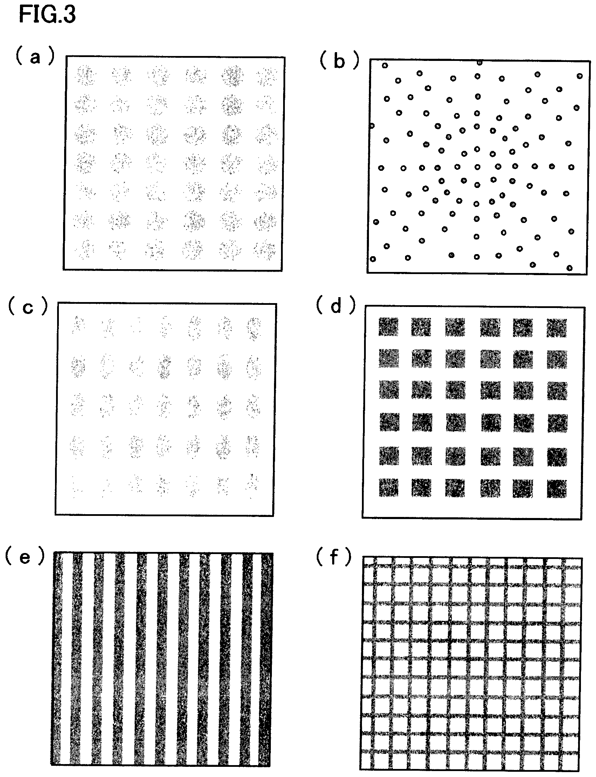

As described above, the pressure-sensitive adhesive layer is formed by patterning. Any appropriate shape may be adopted as its pattern shape as long as the pressure-sensitive adhesive layer is formed so as to cover only part of the first base material. Examples of the pattern shape of the pressure-sensitive adhesive layer include a dot shape (FIG. **3(a)** to FIG. **3(f)**), a stripe shape (FIG. **3(e)**), a grid shape (FIG. **3(f)**), a hairline shape, and a combination thereof . Constituent elements for the pattern shape (e.g., dots forming a dot shape, or lines forming a stripe shape or a grid shape) are preferably distributed over an entire region on the first base material. In one embodiment, the pressure-sensitive adhesive layer maybe formed in a dot shape. Such pressure-sensitive adhesive layer pattern may be formed by, for example, applying a pressure-sensitive adhesive with a spray. When the pattern is formed in a dot shape, an interval between a dot and another dot is, for example, from 0.1 mm to 100 mm, preferably from 1 mm to 50 mm. When the interval falls within such range, at the time of the transfer of the pressure-sensitive adhesive layer onto a separator, the clogging of the pores of the separator is more effectively prevented, and hence the permeability of an electrolytic solution into the separator can be improved. In the present invention, the shrinkage of the separator can be prevented because the pressure-sensitive adhesive layer is evenly formed by the patterning of the pressure-sensitive adhesive layer.

In a plan view, the ratio of the area of the pressure-sensitive adhesive layer to the area of the first base material is preferably from 5% to 90%, more preferably from 10% to 80%, still more preferably from 20% to 50%. When the ratio falls within such range, at the time of the transfer of the pressure-sensitive adhesive layer onto a separator, the clogging of the pores of the separator is prevented, and hence the permeability of an electrolytic solution into the separator is maintained.

The thickness of the pressure-sensitive adhesive layer is preferably from 1 μm to 30 μm, more preferably from 3 μm to 10 μm. When the thickness falls within such range, apressure-sensitive adhesive layer excellent in pressure-sensitive adhesive strengths with an electrode and a separator can be formed.

The tack value of the pressure-sensitive adhesive layer forming the pressure-sensitive adhesive tape of the present invention at 25°C is preferably 10 N or less, more preferably 8 N or less, particularly preferably 5 N or less.

When the tack value is more than 10 N, the handleability of the tape in a nonaqueous battery production process may deteriorate. The tack value is preferably as small as possible, and a lower limit value therefor is, for example, 0 N. The tack value is measured by a probe tack method with a tacking tester manufactured by Rhesca Co., Ltd.

In one embodiment, the pressure-sensitive adhesive layer contains a heat-weldable pressure-sensitive adhesive. The pressure-sensitive adhesive layer containing the heat-weldable pressure-sensitive adhesive does not show any pressure-sensitive adhesive property at normal temperature, and expresses a pressure-sensitive adhesive property by being heated (e.g., by being heated at from 40°C to 150°C) . The use of such pressure-sensitive adhesive layer can provide a pressure-sensitive adhesive tape excellent in handleability in a battery production process. In addition, in another embodiment, the pressure-sensitive adhesive layer may contain a pressure-sensitive adhesive.

The heat-weldable pressure-sensitive adhesive contains any appropriate base polymer as long as the effects of the present invention are obtained. The base polymer to be incorporated into the heat-weldable pressure-sensitive adhesive is, for example, a thermoplastic elastomer.

The content of the thermoplastic elastomer in the heat-weldable pressure-sensitive adhesive is preferably from 80 parts by weight to 100 parts by weight, more preferably from 90 parts by weight to 100 parts by weight, still more preferably from 95 parts by weight to 100 parts by weight with respect to 100 parts by weight of the base polymer in the heat-weldable pressure-sensitive adhesive. When the content falls within such range, a pressure-sensitive adhesive tape that is excellent in pressure-sensitive adhesive property and that is excellent in adherend retentivity even in an electrolytic solution can be obtained.

The softening point of the thermoplastic elastomer is preferably 100°C or less, more preferably from 30°C to 100°C, still more preferably from 50°C to 95°C, particularly preferably from 60°C to 95°C. When the softening point falls within such range, a pressure-sensitive adhesive tape that can reduce damage to an adherend due to heating at the time of its bonding, and that is excellent in workability can be obtained. The softening point may be measured by, for example, a ring and ball measurement method or a thermomechanical analysis method (TMA).

As monomer components for forming the thermoplastic elastomer, there may be given, for example: $\alpha$-olefins each having about 2 to 10 carbon atoms (preferably 2 to 4 carbon atoms), such as ethylene, propylene, 1-butene, 1-hexene, 3-methyl-1-butene, 4-methyl-1-pentene, 1-heptene, 1-octene, and1-decene; and styrene. Examples of the thermoplastic elastomer include: a homopolymer of any one of the monomer components; a random polymer or block polymer of two or more kinds of monomer components selected from the monomer components; a random, block, or graft polymer of any one of the monomer components and any other monomer component; and a mixture thereof.

In one embodiment, the thermoplastic elastomer is a random polymer or block polymer including an $\alpha$-olefin and/or styrene. Examples of such thermoplastic elastomer include linear short-chain branched polyethylene (LLDPE), an ethylene-propylene copolymer, a propene-butene copolymer, an ethylene-styrene copolymer, an ethylene-butene-styrene copolymer, and an ethylene-propylene-styrene copolymer. When such thermoplastic elastomer is used, a pressure-sensitive adhesive tape excellent in pressure-sensitive adhesive property can be obtained.

Commercially available products may each be used as the thermoplastic elastomer. Examples of the commercially available products of the thermoplastic elastomer include: a product available under the product name "ARON MELT PPET-1600" from Toagosei Co., Ltd.; products available under the product names "Kraton Polymer FG1924 GT" and "Kraton Polymer FG1901 X" from Kraton Polymers Japan Limited; products available under the product names "Tuftec M1913" and "Tuftec M1943" from Asahi Kasei Chemicals Corporation; and a product available under the product name "TOYO-TAC PMA-L" from Toyobo Co., Ltd.

In one embodiment, an acid-modified thermoplastic elastomer, a carbonyl-modified thermoplastic elastomer, a hydroxyl group-modified thermoplastic elastomer, an amine-modified thermoplastic elastomer, or the like is used as the thermoplastic elastomer. Of those, an acid-modified thermoplastic elastomer is preferably used.

The acid-modified thermoplastic elastomer may be obtained by subjecting a thermoplastic elastomer to graft polymerization with an unsaturated carboxylic acid and/or an acid anhydride thereof. In more detail, the acid-modified thermoplastic elastomer may be formed by, for example, bonding the unsaturated carboxylic acid and/or the acid anhydride thereof serving as a side chain to the thermoplastic elastomer serving as a main chain.

The graft ratio of the acid-modified thermoplastic elastomer may be appropriately adjusted by a known melt-kneading method. The graft ratio of the acid-modified thermoplastic elastomer is, for example, from 0.05 wt% to 10 wt%, preferably from 0.1 wt% to 5 wt% with respect to the thermoplastic elastomer to be grafted. When the graft ratio falls within such range, a pressure-sensitive adhesive layer having a moderate pressure-sensitive adhesive strength as a pressure-sensitive adhesive layer configured to bond a separator and an electrode to each other can be formed.

The heat-weldable pressure-sensitive adhesive may further contain a tackifier. Examples of the tackifier may include a rosin derivative resin, a polyterpene resin, a petroleum resin, and an oil-soluble phenol resin. Of those, a petroleum resin (e.g., an aromatic petroleum resin or an aliphatic petroleum resin) is preferred. A hydrogenated petroleum resin (a saturated aliphatic hydrocarbon resin or an aromatic hydrocarbon resin) is particularly preferred because the resin has low reactivity with an electrolytic solution component and hence hardly causes the deterioration of the electrolytic solution.

The softening point of the tackifier is preferably from 100°C to 150°C, more preferably from 110°C to 140°C, still more preferably from 115°C to 135°C.

The content of the tackifier in the heat-weldable pressure-sensitive adhesive is preferably from 5 parts by weight to 50 parts by weight, more preferably from 10 parts by weight to 30 parts by weight, still more preferably from 15 parts by weight to 30 parts by weight with respect to 100 parts by weight of the base polymer in the heat-weldable pressure-sensitive adhesive. When the content falls within such range, a pressure-sensitive adhesive tape that can show a pressure-sensitive adhesive property even when heated at relatively low temperature (e.g., from 50°C to 150°C) can be obtained.

The pressure-sensitive adhesive contains any appropriate pressure-sensitive base polymer as long as the effects of the present invention are obtained. Examples of the base polymer to be incorporated into the pressure-sensitive adhesive include an acrylic resin, a rubber-based resin, and a silicone-based resin.

An example of the acrylic resin is an acrylic resin obtained by polymerizing a monomer component containing a (meth) acrylic acid alkyl ester. Examples of the (meth) acrylic acid alkyl ester may include (meth) acrylic acid alkyl esters each having a linear or branched alkyl group, the alkyl group having 4 to 20 carbon atoms, such as n-butyl (meth)acrylate, isobutyl (meth)acrylate, s-butyl (meth)acrylate, t-butyl (meth)acrylate, pentyl (meth)acrylate, isopentyl (meth)acrylate, hexyl (meth)acrylate, heptyl (meth)acrylate, octyl (meth)acrylate, 2-ethylhexyl (meth)acrylate, isooctyl (meth)acrylate, nonyl (meth)acrylate, isononyl (meth)acrylate, decyl (meth)acrylate, isodecyl (meth)acrylate, undecyl (meth)acrylate, dodecyl (meth)acrylate, tridecyl (meth)acrylate, tetradecyl (meth)acrylate, pentadecyl (meth)acrylate, hexadecyl (meth)acrylate, heptadecyl (meth)acrylate, octadecyl (meth)acrylate, nonadecyl (meth)acrylate, and eicosyl (meth)acrylate. Of those, from the viewpoints of an adhesive property with an adherend and bonding workability, a (meth) acrylic acid alkyl ester having an alkyl group having 5 to 12 carbon atoms is preferred, and n-butyl acrylate or 2-ethylhexyl acrylate (2EHA) is more preferred.

The content of the (meth)acrylic acid alkyl ester is preferably from 50 parts by weight to 100 parts by weight, more preferably from 70 parts by weight to 100 parts by weight with respect to 100 parts by weight of the monomer components to be used in the polymerization of the acrylic resin.

The acrylic resin may contain a constituent unit derived from any other monomer copolymerizable with the (meth) acrylic acid alkyl ester as required for the purpose of modifying a cohesive strength, heat resistance, a cross-linking property, or the like. Examples of such other monomer include: carboxyl group-containing monomers, such as acrylic acid, methacrylic acid, itaconic acid, maleic acid, fumaric acid, crotonic acid, and carboxyethyl acrylate; acid anhydride group-containing monomers, such as maleic anhydride and itaconic anhydride; hydroxyl group-containing monomers, such as 2-hydroxyethyl (meth)acrylate, hydroxypropyl (meth)acrylate, and hydroxybutyl (meth)acrylate; amide-based monomers, such as (meth)acrylamide, N,N-dimethyl (meth)acrylamide, N-butyl (meth)acrylamide, N-methylol (meth)acrylamide, and N-methylolpropane (meth)acrylamide; vinyl ester-based monomers; styrene-based monomers; vinyl ether-based monomers; cyano acrylate-based monomers, such as acrylonitrile and methacrylonitrile; epoxy group-containing acrylic monomers, such as glycidyl (meth)acrylate; olefin-based monomers; diene-based monomers; amino group-containing monomers, such as aminoethyl (meth)acrylate, N,N-dimethylaminoethyl (meth)acrylate, and t-butylaminoethyl (meth)acrylate; alkoxyalkyl (meth)acrylate-based monomers; monomers each having a nitrogen atom-containing ring, such as N-vinylpyrrolidone, N-methylvinylpyrrolidone, N-vinylpyridine, and N-vinylpiperidone; N-vinyl carboxylic acid amides; sulfonic acid group-containing monomers, such as styrenesulfonic acid and allyl sulfonic acid; phosphoric acid group-containing monomers, such as 2-hydroxyethyl acryloyl phosphate; maleimide-based monomers; itaconimide-based monomers; succinimide-based monomers, such as N-(meth)acryloyloxymethylenesuccinimide, N-(meth)acryloyl-6-oxyhexamethylenesuccinimide, and N-(meth)acryloyl-8-oxyoctamethylenesuccinimide; glycol-based acrylic ester monomers; monomers each having an oxygen atom-containing heterocycle, such as tetrahydrofurfuryl (meth) acrylate; acrylate-based monomers each containing a fluorine atom, such as a fluorine-based (meth)acrylate; acrylate-based monomers each containing a silicon atom, such as a silicone-based (meth)acrylate; and polyfunctional monomers, such as hexanediol di(meth)acrylate, (poly)ethylene glycol di(meth)acrylate, (poly)propylene glycol di(meth)acrylate, neopentyl glycol di(meth)acrylate, pentaerythritol di(meth)acrylate, trimethylolpropane tri(meth)acrylate, pentaerythritol tri(meth)acrylate, dipentaerythritol hexa(meth)acrylate, a polyfunctional epoxy acrylate, a polyfunctional polyester acrylate, a polyfunctional polyurethane acrylate, divinylbenzene, butyl di(meth)acrylate, and hexyl di(meth)acrylate. Those monomer components may be used alone or in combination thereof. Of those, a hydroxyl group- or carboxyl group-containing monomer is preferably used, and 2-hydroxyethyl (meth)acrylate, hydroxybutyl (meth)acrylate, or acrylic acid (AA) is more preferably used.

The content of the hydroxyl group-containing monomer is preferably less than 10 parts by weight, more preferably 5 parts by weight or less, still more preferably 2 parts by weight or less with respect to 100 parts by weight of the monomer components to be used in the polymerization of the acrylic resin. The content of the carboxyl group-containing monomer is preferably less than 20 parts by weight, more preferably 5 parts by weight or less with respect to 100 parts by weight of the monomer components to be used in the polymerization of the acrylic resin.

The weight-average molecular weight of the acrylic resin is preferably from 50,000 to 5,000,000, more preferably from 100,000 to 2, 000, 000, still more preferably from 200,000 to 1,500,000. When the weight-average molecular weight is less than 50,000, a pressure-sensitive adhesive component may be eluted in a nonaqueous electrolytic solution. In addition, when the weight-average molecular weight is more than 5,000,000, the tape may be unable to express a sufficient adhesive property. The weight-average molecular weight is measured by gel permeation chromatography (GPC) . Measurement conditions are as described below. The weight-average molecular weight was calculated in terms of polystyrene.

Measurement apparatus: HLC-8120GPC (product name, manufactured by Tosoh Corporation)
Column: TSKgel GMH-H(S)$\times$2 (product number, manufactured by Tosoh Corporation)
Flow rate: 0.5 ml/min
Injection volume: 100 $\mu$l
Column temperature: 40°C
Eluent: THF
Injection sample concentration: 0.1 wt%
Detector: differential refractometer

Examples of the rubber-based resin may include: natural rubber-based resins; and synthetic rubber-based resins (including block copolymers and random copolymers), such as an isoprene rubber, a polyisobutylene rubber, a butyl rubber, an ethylene-propylene rubber, a styrene-butadiene rubber, a styrene-isoprene rubber, a styrene-ethylene-propylene-styrene rubber, a styrene-isoprene-styrene block copolymer, a styrene-butadiene-styrene block copolymer, a styrene-ethylene-butylene-styrene block copolymer, a styrene-ethylene-propylene-styrene block copolymer, a styrene-ethylene-propylene block copolymer, and a reclaimed rubber, and modified products thereof. Those rubber-based resins may be used alone or in combination thereof. Of those, a butyl rubber or a polyisobutylene rubber is preferred because any such rubber has low reactivity with an electrolytic solution component and hence hardly causes the deterioration of the electrolytic solution.

Examples of the silicone-based resin include a silicone rubber or silicone resin containing organopolysiloxane as a main component, and a product obtained by adding a cross-linking agent, such as a siloxane-based cross-linking agent or a peroxide-based cross-linking agent, to the rubber or the resin to cross-link and polymerize the rubber or the resin.

In one embodiment, a pressure-sensitive adhesive that can swell in an electrolytic solution (e.g., an electrolytic solution containing LiPF$_6$ and/or LiBF$_4$ as an electrolyte, and containing a solvent, which is obtained by mixing a cyclic carbonate, such as ethylene carbonate or propylene carbonate, and a chain carbonate, such as diethyl carbonate or ethyl methyl carbonate, at any appropriate ratio, as a solvent) is used as the pressure-sensitive adhesive forming the pressure-sensitive adhesive layer. When an electrode member including a separator and electrodes is formed by using the pressure-sensitive adhesive that can swell in the electrolytic solution, the electrode member is excellent in vibration-damping property because the pressure-sensitive adhesive layer swells in the electrolytic solution at the time of the use of the member in a battery. Such effect is particularly useful in a mode in which the patterned pressure-sensitive adhesive layer is transferred onto an adherend, that is, a mode in which the pressure-sensitive adhesive layer is not formed on the entire surface of the adherend. Examples of the pressure-sensitive adhesive that can swell in the electrolytic solution include pressure-sensitive adhesives each having a high affinity for a nonaqueous electrolytic solution, such as an acrylic pressure-sensitive adhesive, a urethane-based pressure-sensitive adhesive, and a silicone-based pressure-sensitive adhesive each having an alkyl group having 4 or less carbon atoms on a side chain thereof.

The pressure-sensitive adhesive that can swell in the electrolytic solution has a swelling degree for a nonaqueous electrolytic solution of preferably from 5% to 200%, more preferably from 10% to 150%, still more preferably from 30% to 100%. The term "swelling degree" as used herein means a change in thickness of the pressure-sensitive adhesive when the pressure-sensitive adhesive is immersed in an ethylene carbonate-diethyl carbonate mixed solvent [ethylene carbonate/diethyl carbonate (volume ratio)=1/1] containing LiPF$_6$ at a concentration of 1.4 mol/l and having a liquid temperature of 60°C for a time period of 8 hours.

The pressure-sensitive adhesive layer may contain any appropriate additive as required. Examples of the additive include a cross-linking agent, a tackifier, a plasticizer (e.g., a trimellitic acid ester-based plasticizer or a pyromellitic acid ester-based plasticizer), apigment, adye, a filler, an age resistor, a conductive material, a UV absorber, a light stabilizer, a release modifier, a softener, a surfactant, a flame retardant, an antioxidant, and a solvent.

C. First Base Material

The first base material may include any appropriate material as long as the pressure-sensitive adhesive layer can be formed in a peelable manner thereon. Examples of the first base material include: a fiber-based base material, such as a woven fabric or a non-woven fabric; a paper-based base material; and a plastic-based base material, such as a resin film. In addition, a foam, such as a foam sheet, may be used as the base material. Further, the base material may include a plurality of layers. When the base material has a multilayer form, the respective layers may be the same base material, or may be a combination of different base materials.

The thickness of the first base material is preferably from 25 μm to 75 μm. When the thickness falls within such range, a pressure-sensitive adhesive tape excellent in workability at the time of the transfer of the pressure-sensitive adhesive layer onto an adherend can be obtained.

D. Second Base Material

Any appropriate material may be used as a material forming the second base material. Examples of the second base material include: a fiber-based base material, such as a woven fabric or a non-woven fabric; a paper-based base material; and a plastic-based base material, such as a resin film. Of those, a plastic-based base material is preferably used because the base material hardly dissolves in an electrolytic solution and hence hardly causes the deterioration of the electrolytic solution, and a plastic-based base material formed of polyimide, polyphenylene sulfide, or polyolefin (e.g., polypropylene) is particularly preferably used. In addition, a plastic-based base material formed of polypropylene is preferably used because the base material is inexpensive. The second base material may be a base material including a plurality of layers. When the base material has a multilayer form, the respective layers may be the same base material, or may be a combination of different base materials.

The thickness of the second base material is, for example, from 10 μm to 50 μm.

E. Method of producing Pressure-sensitive Adhesive Tape

The pressure-sensitive adhesive tape may be produced by any appropriate method. For example, the pressure-sensitive adhesive tape may be obtained by applying a composition for forming a pressure-sensitive adhesive layer onto the first base material. In addition, the pressure-sensitive adhesive tape may be produced by applying the composition for forming a pressure-sensitive adhesive layer to both surfaces of the second base material to form pressure-sensitive adhesive layers, and bonding one of the pressure-sensitive adhesive layers and the first base material to each other. The composition for forming a pressure-sensitive adhesive layer contains the pressure-sensitive adhesive and any appropriate additive.

Any appropriate method may be adopted as a method of applying the composition for forming a pressure-sensitive adhesive layer. For example, the composition for forming a pressure-sensitive adhesive layer is applied by a method such as screen printing, spray coating, gravure coating, flexographic coating, or a die coater to form the patterned pressure-sensitive adhesive layer.

Examples

Now, the present invention is specifically described by way of Examples. However, the present invention is by no means limited to these Examples. Evaluation methods in Examples are as described below. In addition, in Examples, the terms "part (s)" and "%" are by weight unless otherwise stated.

[Example 1]

A mixture of 2-ethylhexyl acrylate and acrylic acid (2-ethylhexyl acrylate/acrylic acid=95 parts by weight/5 parts by weight), 0.2 part by weight of benzoyl peroxide serving as an initiator, and 120 parts by weight of ethyl acetate were loaded into a four-necked flask including a stirring blade, a temperature gauge, a nitrogen gas-introducing tube, and a condenser. While the mixture was gently stirred, a nitrogen gas was introduced into the flask and a liquid temperature in the flask was kept around 60°C, followed by a polymerization reaction for about 6 hours. Thus, an acrylic copolymer (1) having a weight-average molecular weight of 1,300,000 was obtained.

A pressure-sensitive adhesive (1) having a solid content of 10% was prepared by adding 2 parts by weight of an isocyanate-based cross-linking agent (manufactured by Nippon Polyurethane Industry Co., Ltd., product name: "CORONATE L") and ethyl acetate to a resin composition (2) containing 100 parts by weight of the acrylic copolymer (1).

The pressure-sensitive adhesive (1) was applied in a dot shape to a first base material including a polyester resin (manufactured by Toray Advanced Film Co., Ltd., product name: "Cerapeel MD", thickness: 38 μm) . After that, the applied layer was dried. Thus, a pressure-sensitive adhesive tape (1) including the first base material and a pressure-sensitive adhesive layer formed by patterning in a dot shape on the first base material (thickness: 5 μm, ratio of the total area of the pressure-sensitive adhesive layer to the area of the first base material (hereinafter sometimes referred to as "area ratio of the pressure-sensitive adhesive layer"): 25%, interval between dots: 30 mm) was obtained.

[Example 2]

A pressure-sensitive adhesive tape (2) was obtained in the same manner as in Example 1 except that the thickness of the pressure-sensitive adhesive layer was set to 30 $\mu$m.

[Example 3]

Aheat-weldable pressure-sensitive adhesive (1) having a solid content of 10% was obtained by adding 30 parts by weight of analicyclic saturated hydrocarbon resin (manufactured by Arakawa Chemical Industries, Ltd., product name: "ARKON P-125") and toluene to 100 parts by weight of a hydrogenated styrene-based thermoplastic elastomer (manufactured by Asahi Kasei Chemicals, product name: "TUFTEC M1913", weight-average molecular weight: 110,000).
The heat-weldable pressure-sensitive adhesive (1) was applied in a dot shape to a first base material including a polyester resin (manufactured by Toray Advanced Film Co., Ltd., product name: "Cerapeel MD", thickness: 38 $\mu$m). After that, the applied layer was dried. Thus, a pressure-sensitive adhesive tape (3) including the first base material and a pressure-sensitive adhesive layer formed by patterning in a dot shape on the first base material (thickness: 1 $\mu$m, area ratio of the pressure-sensitive adhesive layer: 50%, interval between dots: 5 mm) was obtained.

[Example 4]

A pressure-sensitive adhesive tape (4) was obtained in the same manner as in Example 3 except that: the thickness of the pressure-sensitive adhesive layer was set to 3 $\mu$m; and the ratio of the total area of the dots to the area of the first base material was set to 30%.

[Example 5]

A heat-weldable pressure-sensitive adhesive (2) havingasolid content of 10% was obtained by adding 30 parts by weight of analicyclic saturated hydrocarbon resin (manufactured by Arakawa Chemical Industries, Ltd., product name: "ARKON P-125") and toluene to 100 parts by weight of a polyolefin-based pressure-sensitive adhesive (manufactured by Toyobo Co., Ltd., product name: "TOYO-TAC PMA-L", weight-average molecular weight: 80,000).
The heat-weldable pressure-sensitive adhesive was applied in a dot shape to a first base material including a polyester resin (manufactured by Toray Advanced Film Co., Ltd., product name: "Cerapeel", thickness: 38 $\mu$m). After that, the applied layer was dried. Thus, a pressure-sensitive adhesive tape (5) including the first base material and a pressure-sensitive adhesive layer formed by patterning in a dot shape on the first base material (thickness: 1 $\mu$m, area ratio of the pressure-sensitive adhesive layer: 50%, interval between dots: 50 mm) was obtained.

[Example 6]

A pressure-sensitive adhesive tape (6) was obtained in the same manner as in Example 5 except that the thickness of the pressure-sensitive adhesive layer was set to 3 $\mu$m.

[Example 7]

A mixture of 2-ethylhexyl acrylate, ethyl acrylate, 2-hydroxyethyl acrylate, and N-phenylmaleimide (2-ethylhexyl acrylate/ethyl acrylate/2-hydroxyethyl acrylate/N-phenylmaleimide=30 parts by weight/70 parts by weight/4 parts by weight/10 parts by weight), 0.2 part by weight of benzoyl peroxide serving as an initiator, and 200 parts by weight of toluene were loaded into a four-necked flask including a stirring blade, a temperature gauge, a nitrogen gas-introducing tube, and a condenser. While the mixture was gently stirred, a nitrogen gas was introduced into the flask and a liquid temperature in the flask was kept around 60°C, followed by a polymerization reaction for about 6 hours. Thus, an acrylic copolymer (2) having a weight-average molecular weight of 500,000 was obtained. A heat-weldable pressure-sensitive adhesive (3) having a solid content of 10% was obtained by adding 2 parts by weight of a polyisocyanate-based compound (manufactured by Nippon Polyurethane Industry Co., Ltd., product name: "CORONATE L"), 20 parts by weight of a tackifying resin SUMILITE RESIN PR-12603N (manufactured by Sumitomo Bakelite Co., Ltd.), and toluene to 100 parts by weight of the acrylic copolymer (2).
The heat-weldable pressure-sensitive adhesive (3) was applied in a dot shape to a first base material including a polyester resin (manufactured by Mitsubishi Plastics, Inc., product name: "DIAFOIL MRF", thickness: 38 $\mu$m) . After that, the applied layer was dried. Thus, a pressure-sensitive adhesive tape (7) including the first base material and a pressure-sensitive adhesive layer formed by patterning in a dot shape on the first base material (thickness: 3 um, area ratio of the pressure-sensitive adhesive layer: 60%, interval between dots: 2 mm) was obtained.

[Example 8]

A pressure-sensitive adhesive (2) having a solid content of 10% was obtained by adding 30 parts by weight of polyisobutylene (manufactured by BASF Japan Ltd., product name: "Oppanol B12SFN", weight-average molecular weight: 50,000) serving as a low-molecular weight component and toluene to 100 parts by weight of a rubber-based pressure-sensitive adhesive (manufactured by BASF Japan Ltd., product name: "Oppanol B80", weight-average molecular weight: 750,000).

The pressure-sensitive adhesive (2) was applied in a stripe shape to a first base material including a polyester resin (manufactured by Mitsubishi Plastics, Inc., product name: "DIAFOIL MRF", thickness: 38 $\mu$m). After that, the applied layer was dried. Thus, a pressure-sensitive adhesive tape (8) including the first base material and a pressure-sensitive adhesive layer formed by patterning in a stripe shape on the first base material (thickness: 25 $\mu$m, area ratio of the pressure-sensitive adhesive layer: 70%, interval between stripes: 100 mm) was obtained.

[Example 9]

A pressure-sensitive adhesive (3) having a solid content of 15% was obtained by adding 30 parts by weight of an alicyclic saturated hydrocarbon resin (manufactured by Arakawa Chemical Industries, Ltd., product name: "ARKON P-125") and toluene to 100 parts by weight of a rubber-based pressure-sensitive adhesive (manufactured by BASF Japan Ltd., product name: "Oppanol B50", weight-average molecular weight: 340,000).

The pressure-sensitive adhesive (3) was applied in a dot shape to a first base material including a polyester resin (manufactured by Mitsubishi Plastics, Inc., product name: "DIAFOIL MRF", thickness: 38 $\mu$m). After that, the applied layer was dried. Thus, a pressure-sensitive adhesive tape (9) including the first base material and a pressure-sensitive adhesive layer formed by patterning in a stripe shape on the first base material (thickness: 10 $\mu$m, area ratio of the pressure-sensitive adhesive layer: 40%, interval between stripes: 20 mm) was obtained.

[Example 10]

A mixture of butyl acrylate, ethyl acrylate, methyl methacrylate, and acrylic acid (butyl acrylate/ethyl acrylate/methyl methacrylate/acrylic acid=100 parts by weight/25 parts by weight/5 parts by weight/4 parts by weight), 0.2 part by weight of 2,2-azodiisobutyronitrile serving as an initiator, and 150 parts by weight of ethyl acetate were loaded into a four-necked flask including a stirring blade, a temperature gauge, a nitrogen gas-introducing tube, and a condenser. While the mixture was gently stirred, a nitrogen gas was introduced into the flask and a liquid temperature in the flask was kept around 60°C, followed by a polymerization reaction for about 6 hours. Thus, an acrylic copolymer (3) having a weight-average molecular weight of 1,100,000 was obtained. A pressure-sensitive adhesive (4) having a solid content of 10% was obtained by adding 2 parts by weight of a polyisocyanate-based compound (manufactured by Nippon Polyurethane Industry Co., Ltd., product name: "CORONATE L") and ethyl acetate to 100 parts by weight of the acrylic copolymer (3).

The pressure-sensitive adhesive (4) was applied in a dot shape to a first base material including a polyester resin (manufactured by Toray Advanced Film Co., Ltd., product name: "Cerapeel MD", thickness: 38 $\mu$m). After that, the applied layer was dried. Thus, a pressure-sensitive adhesive tape (10) including the first base material and a pressure-sensitive adhesive layer formed by patterning in a dot shape on the first base material (thickness: 3 $\mu$m, area ratio of the pressure-sensitive adhesive layer: 10%, interval between dots: 10 mm) was obtained.

[Example 11]

A mixture of butyl acrylate and acrylic acid (butyl acrylate/acrylic acid=95 parts by weight/5 parts by weight), 0.2 part by weight of 2,2-azodiisobutyronitrile serving as an initiator, and 150 parts by weight of ethyl acetate were loaded into a four-necked flask including a stirring blade, a temperature gauge, a nitrogen gas-introducing tube, and a condenser. While the mixture was gently stirred, a nitrogen gas was introduced into the flask and a liquid temperature in the flask was kept around 60°C, followed by a polymerization reaction for about 6 hours. Thus, an acrylic copolymer (4) having a weight-average molecular weight of 1,200,000 was obtained. A pressure-sensitive adhesive (5) having a solid content of 10% was obtained by adding 2 parts by weight of a polyisocyanate-based compound (manufactured by Nippon Polyurethane Industry Co., Ltd., product name: "CORONATE L") and ethyl acetate to 100 parts by weight of the acrylic copolymer (4).

The pressure-sensitive adhesive (4) was applied in a dot shape to a first base material including a polyester resin (manufactured by Toray Advanced Film Co., Ltd., product name: "Cerapeel MD", thickness: 38 $\mu$m). After that, the applied layer was dried. Thus, a pressure-sensitive adhesive tape (11) including the first base material and a pressure-sensitive adhesive layer formed by patterning in a dot shape on the first base material (thickness: 1 $\mu$m, area ratio of

the pressure-sensitive adhesive layer: 50%, interval between dots: 5 mm) was obtained.

[Example 12]

A pressure-sensitive adhesive tape (12) was obtained in the same manner as in Example 11 except that the thickness of the pressure-sensitive adhesive layer was set to 3 $\mu$m.

[Example 13]

Aheat-weldable pressure-sensitive adhesive (4) havingasolid content of 15% was obtained by adding ethyl acetate to 100 parts by weight of an acrylic pressure-sensitive adhesive (manufactured by Kuraray Co., Ltd., product name: "KURARITY LA2140", weight-average molecular weight: 80,000).
The heat-weldable pressure-sensitive adhesive (4) was applied in a dot shape to a first base material including a polyester resin (manufactured by Mitsubishi Plastics, Inc., product name: "DIAFOIL MRF", thickness: 38 $\mu$m). After that, the applied layer was dried. Thus, a pressure-sensitive adhesive tape (13) including the first base material and a pressure-sensitive adhesive layer formed by patterning in a stripe shape on the first base material (thickness: 5 $\mu$m, area ratio of the pressure-sensitive adhesive layer: 30%, interval between stripes: 5 mm) was obtained.

[Example 14]

A pressure-sensitive adhesive tape (14) was obtained in the same manner as in Example 1 except that the thickness of the pressure-sensitive adhesive layer was set to 50 $\mu$m.

[Example 15]

A pressure-sensitive adhesive tape (15) was obtained in the same manner as in Example 1 except that the area ratio of the dots was set to 2%.

[Comparative Example 1]

A pressure-sensitive adhesive tape (16) was obtained in the same manner as in Example 1 except that the area ratio of the dots was set to 100%.

[Reference Example 1]

A pressure-sensitive adhesive tape (17) was obtained in the same manner as in Example 1 except that: the thickness of the pressure-sensitive adhesive layer was set to 0.2 $\mu$m; and the area ratio of the dots was set to 50%.

<Evaluation>

The following test body was produced by using each of the pressure-sensitive adhesive tapes obtained in Examples, Comparative Example, and Reference Example, and the test body was subjected to the following evaluations. The results are shown in Table 1.

(I) Production of Test Body a

The pressure-sensitive adhesive layer side of each of the pressure-sensitive adhesive tapes obtained in Examples and Comparative Example was bonded to the surface of a separator (porous film for a nonaqueous battery, polypropylene separator, manufactured by Celgard, product name: "Celgard", thickness: 25 $\mu$m, porosity: 41%). Thus, a test body a (first base material/pressure-sensitive adhesive layer/separator) including the pressure-sensitive adhesive tape and the separator was obtained. In each of Examples in which the pressure-sensitive adhesive layers including the heat-weldable pressure-sensitive adhesives were used and Comparative Example, the separator and the pressure-sensitive adhesive tape were pressure-bonded to each other at 70°C, and in each of Examples and Comparative Example except the foregoing, the separator and the pressure-sensitive adhesive tape were pressure-bonded to each other at 25°C.

(II) Production of Test Body A

The first base material was peeled from the test body a, and a positive electrode foil for a nonaqueous battery (manufactured by Piotrek Co., Ltd., active material: $LiNiCoMnO_2$ (1.5 mAh/cm$^2$)) was bonded to the exposed pressure-sensitive adhesive layer surface, followed by the application of a pressure of 0.4 MPa for 2 seconds. Thus, a test body A (positive electrode foil/pressure-sensitive adhesive layer/separator) was obtained. In each of Examples in which the pressure-sensitive adhesive layers including the heat-weldable pressure-sensitive adhesives were used and Comparative Example, the positive electrode foil and the pressure-sensitive adhesive layer were pressure-bonded to each other at 70°C, and in each of Examples and Comparative Example except the foregoing, the positive electrode foil and the pressure-sensitive adhesive layer were pressure-bonded to each other at 25°C.

(III) Production of Test Body B

A test body B (negative electrode foil/pressure-sensitive adhesive layer/separator) was produced by the same method as that in the (II) by using a negative electrode foil whose active material was graphite (1.6 mAh/cm$^2$) instead of the positive electrode foil for a nonaqueous battery.

(1) Clogging of Separator

The first base material was peeled from the test body a, and the surface of the separator was visually observed. A case in which the pores of the separator was clogged to such an extent that when the separator was applied to a battery, the function of the separator was inhibited and hence the performance of the battery was adversely affected was evaluated as a failure ($\times$ in Table 1), and a case in which the pressure-sensitive adhesive layer was formed while the function of the separator was maintained was evaluated as a success ($\bigcirc$ in Table 1).

(2) Tack Value

The first base material was peeled from the test body a, and the tack value of the exposed pressure-sensitive adhesive layer surface was measured by a probe tack method. The tack value was measured with a tacking tester (manufactured by Rhesca Co., Ltd.) under the following conditions.

<Measurement Conditions>

Temperature: 25°C
Probe material: SUS
Probe shape: columnar (5 mm$\varphi$)
Pressurization (compression) rate: 30 mm/min
Measurement (separation) rate: 30 mm/min
Preload: 100 gf
Pressurization (compression) time: 1 sec

(3) Swelling Degree

An electrolytic solution formed of a mixed solvent of ethylene carbonate and diethyl carbonate (volume ratio=1:1) containing $LiPF_6$ at a concentration of 1.4 mol/l was prepared.
The test body A was immersed in the electrolytic solution (temperature: 60°C) for 8 hours, and the swelling degree of the pressure-sensitive adhesive layer was calculated from the ratio of a change in thickness after the immersion as compared to its thickness before the immersion in accordance with the following equation.

equation.

Swelling degree (thickness change ratio
$$(\%))=\{(T2-T1)/T1\}\times100$$

T1: The thickness of the pressure-sensitive adhesive layer before the immersion
T2: The thickness of the pressure-sensitive adhesive layer after the immersion

(4) Peel Strength of First Base Material

A peel strength at the time of the peeling of the first base material from the test body a was measured with a precision universal tester (manufactured by Shimadzu Corporation, product name: "AUTOGRAPH AG-I") under the conditions of a temperature of 23°C, a tensile rate of 300 mm/min, and a peel angle of 180°.

(5) Shear Pressure-sensitive Adhesive Strength

The shear pressure-sensitive adhesive strength (positive electrode/separator) of the test body A was measured with a precision universal tester (manufactured by Shimadzu Corporation, product name: "AUTOGRAPH AG-I") under the conditions of a temperature of 25°C and a tensile rate of 300 mm/min.
In addition, the shear pressure-sensitive adhesive strength (negative electrode/separator) of the test body B was measured by the same method as that described above.
In Table 1, a shear pressure-sensitive adhesive strength per unit pressure-sensitive adhesion area (N/cm$^2$) is shown.

(6) Handleability

Whether or not the electrode foil and the separator shifted from each other when each of the test body A and the test body B was lifted with a hand and lightly shaken was evaluated by the following criteria.

○: The electrode foil and the separator do not shift from each other.
△: The electrode foil and the separator shift from each other, but the shift is practically acceptable.
✕: The electrode foil and the separator significantly shift from each other, and the shift is practically unacceptable.

[0075]

Table 1

| | Example 1 | Example 2 | Example 3 | Example 4 | Example 5 | Example 6 |
|---|---|---|---|---|---|---|
| Pressure-sensitive adhesive layer pattern | Dot | Dot | Dot | Dot | Dot | Dot |
| Area ratio of pattern (dots or stripes) (%) | 25 | 25 | 50 | 30 | 50 | 50 |
| Thickness of pressure-sensitive adhesive layer ($\mu$m) | 5 | 30 | 1 | 3 | 1 | 3 |
| Probe tack of pressure-sensitive adhesive layer [N] | 6.1 | 7.5 | 0.5 | 1.3 | 0.0 | 0.0 |
| Swelling degree of pressure-sensitive adhesive layer [%] | 30 | 35 | 20 | 25 | 10 | 6 |
| Peel strength of first base material [N/50 mm] | 0.1 | 0.15 | 0.05 | 0.05 | 0.02 | 0.02 |
| Shear pressure-sensitive adhesive strength [N/cm²] | Positive electrode/separator | 25.6 | 6.6 | 10.4 | 20.4 | 17.3 | 28.6 |
| | Negative electrode/separator | 67.8 | 22.7 | 37.3 | 35.2 | 39.5 | 40.3 |
| Clogging of separator | o | o | o | o | o | o |
| Handleability | o | o | o | o | o | o |

| | Example 7 | Example 8 | Example 9 | Example 10 | Example 11 | Example 12 |
|---|---|---|---|---|---|---|
| Pressure-sensitive adhesive layer pattern | Dot | Stripe | Stripe | Dot | Dot | Dot |
| Area ratio of pattern (dots or stripes) (%) | 60 | 70 | 40 | 10 | 50 | 50 |
| Thickness of pressure-sensitive adhesive layer ($\mu$m) | 3 | 25 | 10 | 3 | 1 | 3 |
| Probe tack of pressure-sensitive adhesive layer [N] | 1.8 | 3.1 | 4.2 | 1.9 | 1.1 | 3.1 |
| Swelling degree of pressure-sensitive adhesive layer [%] | 150 | 10 | 10 | 120 | 80 | 100 |
| Peel strength of first base material [N/50 mm] | 0.08 | 0.1 | 0.07 | 0.07 | 0.05 | 0.08 |
| Shear pressure-sensitive adhesive strength [N/cm²] | Positive electrode/separator | 29.2 | 1.4 | 3.9 | 6.3 | 4.3 | 20.8 |
| | Negative electrode/separator | 39.2 | 2.7 | 34.4 | 28.0 | 21.1 | 27.0 |
| Clogging of separator | o | o | o | o | o | o |
| Handleability | o | o | o | o | o | o |

| | Example 13 | Example 14 | Example 15 | Comparative Example 1 | Reference Example 1 |
|---|---|---|---|---|---|
| Pressure-sensitive adhesive layer pattern | Stripe | Dot | Dot | - | Dot |
| Area ratio of pattern (dots or stripes) (%) | 30 | 25 | 2 | 100 | 50 |
| Thickness of pressure-sensitive adhesive layer ($\mu$m) | 5 | 50 | 5 | 5 | 0.2 |
| Probe tack of pressure-sensitive adhesive layer [N] | 0.3 | 11 | 6.1 | 6.1 | - |
| Swelling degree of pressure-sensitive adhesive layer [%] | Dissolved | 30 | 30 | 20 | 25 |
| Peel strength of first base material [N/50 mm] | 0.05 | 0.18 | 0.1 | 0.1 | - |
| Shear pressure-sensitive adhesive strength [N/cm²] | Positive electrode/separator | 21.3 | 1.84 | 21.6 | 26.4 | - |
| | Negative electrode/separator | 37.0 | 7.15 | 53.5 | 75.9 | - |
| Clogging of separator | o | o | o | × | - |
| Handleability | o | Δ | Δ | o | - |

As is apparent from Table 1, the use of the pressure-sensitive adhesive tape of the present invention can provide a pressure-sensitive adhesive tape that can satisfactorily fix a separator and an electrode to each other while preventing the clogging of the separator to maintain the permeability of an electrolytic solution into the separator. The pressure-sensitive adhesive tape of Reference Example 1 was unsuitable for battery production applications because the pressure-sensitive adhesive layer was not formed in a peelable manner on the first base material.

Industrial Applicability

The pressure-sensitive adhesive tape of the present invention can be suitably used as a pressure-sensitive adhesive tape configured to fix a separator and electrodes in the electrode member of a secondary battery.

Reference Signs List

**10** first base material
**21**, **21'** pressure-sensitive adhesive layer
**22** second base material
**100, 200** pressure-sensitive adhesive tape

**Claims**

1.  A pressure-sensitive adhesive tape, comprising:

    a first base material; and
    a pressure-sensitive adhesive layer formed in a peelable manner on the first base material,
    wherein the pressure-sensitive adhesive layer is formed by patterning.

2.  A pressure-sensitive adhesive tape, comprising:

    a first base material; and
    a pressure-sensitive adhesive laminate formed in a peelable manner on the first base material, wherein:

    the pressure-sensitive adhesive laminate includes a second base material and pressure-sensitive adhesive
    layers formed on both sides of the second base material; and
    the pressure-sensitive adhesive layers are each formed by patterning.

3.  The pressure-sensitive adhesive tape according to claim 1, wherein the pressure-sensitive adhesive layer contains a heat-weldable pressure-sensitive adhesive.

4.  The pressure-sensitive adhesive tape according to claim 2 wherein the pressure-sensitive adhesive layer contains a heat-weldable pressure-sensitive adhesive.

5.  The pressure-sensitive adhesive tape according to claim 1, wherein the pressure-sensitive adhesive layer contains a pressure-sensitive adhesive having a swelling degree for a nonaqueous electrolytic solution of from 5% to 200%.

6.  The pressure-sensitive adhesive tape according to claim 2, wherein the pressure-sensitive adhesive layer contains a pressure-sensitive adhesive having a swelling degree for a nonaqueous electrolytic solution of from 5% to 200%.

7.  The pressure-sensitive adhesive tape according to claim 1, wherein the pressure-sensitive adhesive layer is formed in a dot shape.

8.  The pressure-sensitive adhesive tape according to claim 2, wherein the pressure-sensitive adhesive layer is formed in a dot shape.

9.  The pressure-sensitive adhesive tape according to claim 1, wherein a ratio of an area of the pressure-sensitive adhesive layer to an area of the first base material is from 5% to 90%.

10. The pressure-sensitive adhesive tape according to claim 2, wherein a ratio of an area of the pressure-sensitive adhesive layer to an area of the first base material is from 5% to 90%.

11. The pressure-sensitive adhesive tape according to claim 1, wherein the pressure-sensitive adhesive layer has a thickness of from 1 $\mu$m to 30 $\mu$m.

12. The pressure-sensitive adhesive tape according to claim 2, wherein the pressure-sensitive adhesive layer has a thickness of from 1 $\mu$m to 30 $\mu$m.

13. The pressure-sensitive adhesive tape according to claim 1, wherein the pressure-sensitive adhesive layer has a tack value at 25°C of 10 N or less.

**14.** The pressure-sensitive adhesive tape according to claim 2, wherein the pressure-sensitive adhesive layer has a tack value at 25°C of 10 N or less.

**15.** The pressure-sensitive adhesive tape according to claim 1, wherein a peel strength at 23°C at a time of peeling of the first base material from the pressure-sensitive adhesive layer is 2.00 N/50 mm or less.

**16.** The pressure-sensitive adhesive tape according to claim 2, wherein a peel strength at 23°C at a time of peeling of the first base material from the pressure-sensitive adhesive layer is 2.00 N/50 mm or less.

**17.** The pressure-sensitive adhesive tape according to claim 1, wherein the pressure-sensitive adhesive tape is used by being bonded to a separator at a time of production of a nonaqueous secondary battery.

**18.** The pressure-sensitive adhesive tape according to claim 2, wherein the pressure-sensitive adhesive tape is used by being bonded to a separator at a time of production of a nonaqueous secondary battery.

FIG.1

100

( a )

10

21

100

( b )

21

10

FIG.2

200

21'
22     } 20
21
10

FIG.3

( a )

( b )

( c )

( d )

( e )

( f )

## INTERNATIONAL SEARCH REPORT

International application No.

PCT/JP2016/083594

A.   CLASSIFICATION OF SUBJECT MATTER
*C09J7/02*(2006.01)i, *C09J201/00*(2006.01)i, *H01M2/16*(2006.01)i, *H01M10/04*
(2006.01)i, *H01M10/058*(2010.01)i

According to International Patent Classification (IPC) or to both national classification and IPC

B.   FIELDS SEARCHED

Minimum documentation searched (classification system followed by classification symbols)
C09J7/02, C09J201/00, H01M2/16, H01M10/04, H01M10/058

Documentation searched other than minimum documentation to the extent that such documents are included in the fields searched
Jitsuyo Shinan Koho          1922-1996   Jitsuyo Shinan Toroku Koho   1996-2017
Kokai Jitsuyo Shinan Koho    1971-2017   Toroku Jitsuyo Shinan Koho   1994-2017

Electronic data base consulted during the international search (name of data base and, where practicable, search terms used)
JSTPlus/JMEDPlus/JST7580(JDreamIII)

C.   DOCUMENTS CONSIDERED TO BE RELEVANT

| Category* | Citation of document, with indication, where appropriate, of the relevant passages | Relevant to claim No. |
|---|---|---|
| X | JP 2004-342572 A  (Nitto Denko Corp.), | 1-2,5-17 |
| A | 02 December 2004 (02.12.2004), | 3-4,18 |
| | claim 1; paragraphs [0037], [0046], [0049], | |
| | [0069], [0100], [0102]; example 14 | |
| | & US 2004/0101757 A1 | |
| | claim 1; paragraphs [0038], [0047], [0050], | |
| | [0070], [0101], [0103]; example 14 | |
| | & EP 001432054 A1        & KR 10-2004-0042845 A | |
| | & CN 001500823 A | |

[X] Further documents are listed in the continuation of Box C.          [ ] See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 20 January 2017 (20.01.17) | 31 January 2017 (31.01.17) |

| Name and mailing address of the ISA/ | Authorized officer |
|---|---|
| Japan Patent Office | |
| 3-4-3,Kasumigaseki,Chiyoda-ku, | |
| Tokyo 100-8915,Japan | Telephone No. |

Form PCT/ISA/210 (second sheet) (January 2015)

## INTERNATIONAL SEARCH REPORT

International application No.

PCT/JP2016/083594

C (Continuation).  DOCUMENTS CONSIDERED TO BE RELEVANT

| Category* | Citation of document, with indication, where appropriate, of the relevant passages | Relevant to claim No. |
|---|---|---|
| X | JP 2006-206657 A  (KOKUYO S&T Co., Ltd.), 10 August 2006 (10.08.2006), | 1,3,5,7,9, 11,13,15 |
| A | claim 1; paragraphs [0042], [0043], [0072], [0085] to [0086]; examples 1, 2 & US 2006/0165936 A1 claim 1; paragraphs [0044], [0045], [0087], [0101], [0104]; examples 1 to 2 & EP 001683846 A1      & KR 10-2006-0086299 A & CN 001824718 A | 2,4,6,8,10, 12,14,16-18 |
| A | JP 2015-528629 A  (LG Chem, Ltd.), 28 September 2015 (28.09.2015), claims; paragraph [0040] & US 2015/0033547 A1 claims; paragraph [0073] & WO 2014/209054 A1     & EP 002866293 A1 & KR 10-2015-0002523 A  & CN 104604015 A | 1-18 |
| A | JP 2012-529753 A  (LG Chem, Ltd.), 22 November 2012 (22.11.2012), claims; paragraph [0060] & US 2012/0115025 A1 claims; paragraph [0072] & WO 2012/046911 A1     & EP 002477252 A1 & KR 10-1198294 B1      & CN 102549801 A | 1-18 |
| A | JP 2014-192079 A  (The Furukawa Battery Co., Ltd.), 06 October 2014 (06.10.2014), claims; paragraph [0009] (Family: none) | 1-18 |
| A | JP 2010-205467 A  (Nitto Denko Corp.), 16 September 2010 (16.09.2010), claims; paragraphs [0007], [0044]; examples; fig. 3, 4 & US 2010/0221585 A1 paragraphs [0007], [0054]; examples; fig. 3, 4 & CN 101824282 A        & KR 10-2010-0099064 A | 1-18 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000173642 A

- JP 2001357839 A